# EUROPEAN PATENT APPLICATION

(11) **EP 2 445 094 A2**
(43) Date of publication of application: **25.04.2012**
(21) Application number: 11176801.6
(22) Date of filing: 08.08.2011
(51) Int. Cl.: H02M 1/36

(54) **Electronic apparatus**

(30) Priority: 22.10.2010 KR 20100103552
(71) Applicant: SAMSUNG ELECTRONICS CO., LTD., Suwon-si Gyeonggi-do 442-742 (KR)
(72) Inventor: Kim, Jin-ha, Gyeonggi-do (KR)
(74) Representative: Brandon, Paul Laurence

(57) **Abstract**

An electronic apparatus having reinforced power saving and safety functions, the electronic apparatus may include: a power supply which converts alternating current (AC) power input from an AC power source to direct current (DC) power to be outputted; an AC power switch provided on a first AC power input line connecting the AC power source and the power source and is turned on and off to selectively transmit the AC power to the power supply; a relay provided on a second AC power input line connecting the AC power source and the power supply in parallel with the AC power switch, and receives the DC power from the power supply to selectively transmit the AC power to the power supply; a switching unit which selectively transmits the DC power output from the power supply to the relay; and a controller which controls the switching unit to supply the DC power to the relay if the AC power switch is turned on.

## Description

### BACKGROUND OF THE INVENTION

### 1. Field of the Invention

Apparatuses consistent with the exemplary embodiments relate to an electronic apparatus, and more particularly, to an electronic apparatus which has reinforced power saving and safety functions.

### 2. Description of the Related Art

To save energy consumption of an electronic apparatus such as a TV, a refrigerator, a printer or a photocopier, power consumption regulations are becoming tightened around the world. In particular, regulations on saving standby power for an electronic apparatus, when not in use, have been tightened.

In that respect, a so-called "self shut function" of an electronic apparatus which consumes extremely small power when not in use, even if the electronic apparatus is connected to a commercial power source, is required.

Meanwhile, when such an electronic apparatus is plugged in, current may flow abruptly and cause sparks or overheating. Thus, such risks should be prevented. Also, such an electronic apparatus may become overheated inside or may include important components which should be protected for its life span, and a safety device to provide such features is required.

### SUMMARY OF THE INVENTION

Accordingly, exemplary embodiments herein provide an electronic apparatus which consumes less power.

Another exemplary embodiment provides an electronic apparatus which includes a safety device for components which may be overheated or should be controlled for its life span.

Still another exemplary embodiment provides an electronic apparatus which prevents sparks from occurring due to current when the electronic apparatus is initially plugged in.

Additional utilities and features of the present general inventive concept will be set forth in part in the description which follows and, in part, will be obvious from the description, or may be learned by practice of the general inventive concept.

The foregoing and/or other aspects may be achieved by providing an electronic apparatus including: a power supply which converts alternating current (AC) power input from an AC power source to direct current (DC) power to be outputted; an AC power switch which is provided on a first AC power input line connecting the AC power source and the power source and is turned on and off to selectively transmit the AC power to the power supply; a relay which is provided on a second AC power input line connecting the AC power source and the power supply in parallel with the AC power switch, and receives the DC power from the power supply to selectively transmit the AC power to the power supply; a switching unit which selectively transmits the DC power output from the power supply to the relay; and a controller which controls the switching unit to supply the DC power to the relay if the AC power switch is turned on.

The electronic apparatus may further include a heating unit, and a first circuit breaker which shuts off the DC power supplied from the switching unit to the relay if the heating unit is overheated.

The first circuit breaker may include at least one of a thermostat and a fuse.

The heating unit may be provided in plural, and the first circuit breaker may be provided in series corresponding to the number of heating units.

The electronic apparatus may further include a manipulation panel, and the controller may control the switching unit to shut off the DC power supplied to the relay if a turn-off command is input through the manipulation panel.

The electronic apparatus may further include a second circuit breaker which is provided adjacent to a risk management unit which is required to be managed due to a possibility of occurrence of a fire according to sparks or overheat of the risk management unit, and shuts off the DC power supplied to the relay from the power supply if the risk management unit begins to spark or burst into flames or be overheated.

The electronic apparatus may further include a casing which accommodates therein the power supply, the relay, the power switch, the switching unit and the controller, and a third circuit breaker which is provided adjacently to the casing and shuts off the DC power supplied to the relay from the power supply if a fire breaks out due to an external cause.

The electronic apparatus may further include a DC power switch which is provided to control the supply of the DC power from the power supply to the relay.

The electronic apparatus may further include a life span management unit, and the controller may control the switching unit not to supply the DC power to the relay if a life span of the life span management unit exceeds a predetermined reference life span.

The first AC power supply line may include a thinner cable than the second AC power supply line.

### BRIEF DESCRIPTION OF THE DRAWINGS

The above and/or other aspects of the present general inventive concept will become apparent and more readily appreciated from the following description of the exemplary embodiments, taken in conjunction with the accompanying drawings, in which:
FIG. 1 is a block diagram of an electronic apparatus according to an exemplary embodiment;
FIG. 2 is a block diagram of an electronic apparatus according to another exemplary embodiment;
FIG. 3 is a block diagram of an electronic apparatus according to yet another exemplary embodiment; and
FIG. 4 is a block diagram of an electronic apparatus according to still another exemplary embodiment.

### DETAILED DESCRIPTION OF THE PREFERRED EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

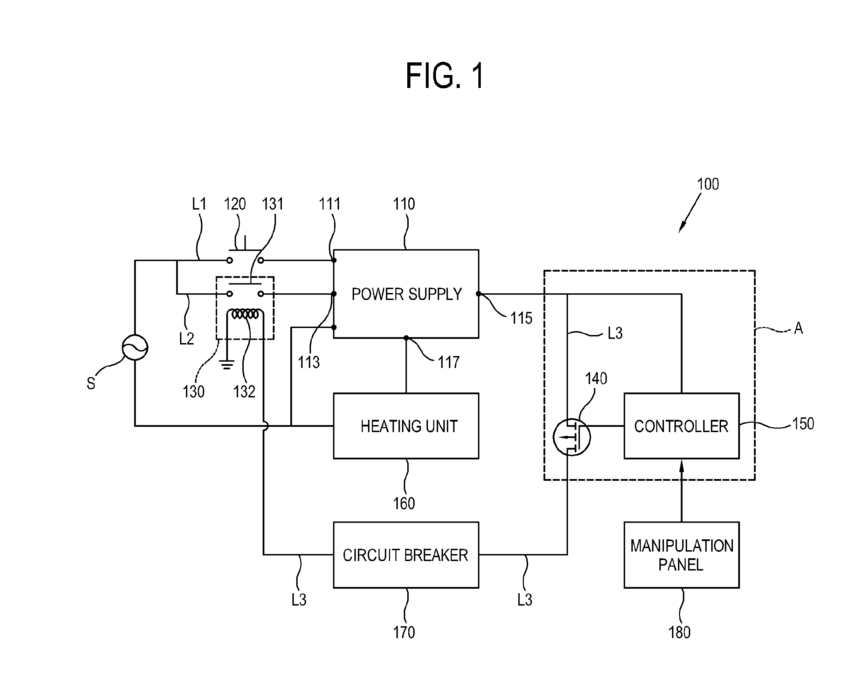

As shown in FIG. 1, an electronic apparatus 100 according to an exemplary embodiment includes a power supply 110 which converts alternating current (AC) power input from an AC power source S to direct current (DC) power to be output, an AC power switch 120 which is provided in front of AC power input ports 111 and 113 of the power supply 110 and selectively transmits the AC power to the power supply 110, a relay 130 which is provided in parallel with the AC power switch 120 and connects the AC power switch 120 and the power supply 110, a switching unit 140 which selectively transmits the DC power output from the power supply 110 to the relay 130, and a controller 150 which controls the switching unit 140 by receiving the DC power from the power supply 110 as a driving power.

The power supply 110 converts input AC power and outputs driving power for internal elements of the electronic apparatus 100. The driving power may include at least one of the DC power and AC power whose frequency or amplitude is modulated.

The power supply 110 converts the AC power, input from the AC power source S, to an output of DC power. The power supply 110 may include a switching mode power supply. The DC power which is output by the power supply 110 is used as a driving power and is supplied to the controller 150 and the relay 130.

The DC power may be several or dozens of voltages of DC power to drive the controller 150 and the relay 130. If DC voltages to drive the controller 150 and to drive the relay 130 are different, the power supply 110 may output DC power at different voltages for each of the components.

The power supply 110 includes a DC power output port 115 to output the DC power. The power supply 110 may further include a driving power output port 117 to supply driving power to other elements of the electronic apparatus 100.

The driving power output through the driving power output port 117 may be supplied to elements which relatively consume more power. For example, if the electronic apparatus 100 includes an electrophotographic image forming apparatus, the driving power may be supplied to a heater of a fusing unit which fuses toner applied to a print medium by heat and pressure. If the heater is heated by induction heating, the driving power may be high frequency AC power with a frequency of dozens or hundreds of kHz. For example, the element which receives the driving power from the driving power output port 117 may include the heating unit 160 of the fusing unit as shown in FIG. 1.

The element which receives the driving power from the driving power output port 117 has a relatively larger load than the elements which receive the driving power from the DC power output port 115 (e.g., the controller 150 and the relay 130). For example, a total power consumption of the elements which receive the DC power from the DC power output port 115 may be 1W (watt) or less while a total power consumption of the elements which receive the driving power from the driving power output port 117 may range from dozens of watts to hundreds of watts.

The AC power switch 120 may open or close a first AC power input line L1 between the AC power source 120 and a first AC power input terminal 111 of the power supply 110. Then, the AC power may selectively be input to the power supply 110.

The AC power switch 120 may include a push type switch. That is, if the AC power switch 120 includes a push type switch, it is turned on when a user pushes the AC power switch 120 and is turned off when the AC power switch 120 is released. Further, the AC power switch 120 may include a toggle switch or a pull type switch or other types of switches as long as it opens and closes the AC power input line L1.

The AC power switch 120 may be provided in one of opposite ends of the electronic apparatus 100, but is not limited thereto. Alternatively, the AC power switch 120 may be provided in a rear or front side of the electronic apparatus 100.

The relay 130 may open or close a second AC power input line L2 between the AC power source S and a second AC power input terminal 113 of the power supply 110. More specifically, if DC power is supplied by the power supply 110, a coil 132 of the relay 130 is magnetized and the second AC power input line L2 contacts a contact terminal 131 to thereby close the second AC power input line L2. By contrast, if the DC power is not supplied to the coil 132 of the relay 130 (or terminates a DC power thereto), the contact terminal 131 does not make contact with (or separates from) the second AC power input line L2 due to a repulsive force of a spring (not shown) of the relay 130 to thereby open the second AC power input line L2.

The switching unit 140 receives a control signal from the controller 150 and opens and closes a DC power line L3 which connects a DC power output terminal 115 of the power supply 110 and the coil 132 of the relay 130.

The switching unit 140 may include a field effect transistor (FET) or a bipolar junction transistor (BJT).

The controller 150 outputs a high signal to a gate terminal of the switching unit 140 if the AC power switch 120 is turned on. Then, the switching unit 140 closes the DC power line L3, and the DC power output from the power supply 110 is supplied to the coil 132 of the relay 130.

The controller 150 may detect whether the AC power switch 120 is turned on through the DC voltage output by the DC power output terminal 115 of the power supply 110. That is, if the DC power output terminal 115 is high (e.g., 5v), the AC power is being input to the power supply 110, and thus the controller 150 may determine that the AC power switch 120 is turned on.

The controller 150 and the switching unit 140 may be mounted in a single board.

The controller 150 may be booted and initially set by a booting sequence stored in a memory (not shown).

On the DC power line L3 from the DC power output terminal 115 of the power supply 110 to the coil 132 of the relay 130, electronic elements which consume relatively less power may be provided. For example, a total power consumption of the electronic elements provided on the DC power line L3 (controller 150, circuit breaker 170 and coil 132 of the relay 130 in FIG. 1) may be 1W or less, but is not limited thereto, and may vary.

The electronic apparatus 100 according to the exemplary embodiment of FIG. 1 may further include a circuit breaker 170 which shuts off the DC power supplied from the switching unit 140 to the relay 130 in the case of internal risky factors, such as, for example, if the heating unit 160 becomes overheated. The heating unit 160 and the first circuit breaker 170 may be omitted as the case may be.

The circuit breaker 170 may include at least one of a thermostat and a fuse. If a thermostat is used, it may receive DC power from the power supply 110.

The heating unit 160 may be provided in plural. In this case, the circuit breaker 170 may be provided adjacent to the plurality of heating units 160 corresponding to the number of the plurality of heating units 160. The plurality of circuit breakers 170 may be provided in series along the DC power line L3.

The electronic apparatus 100 may further include a manipulation panel 180.

The manipulation panel 180 may further include a predetermined input key (not shown) to receive a user's command, and a display panel (not shown) to display thereon the received user's command or a status of the electronic apparatus 100. If the display panel includes a touch panel, the input key may be omitted.

If a turn-off command is input through the manipulation panel 180, the controller 150 controls the switching unit 140 to shut off the DC power supplied from the power supply 110 to the relay 130. More specifically, the controller 150 outputs a low signal to a gate terminal of the switching unit 140, and the switching unit 140 opens the DC power line L3. Then, even if the electronic apparatus 100 is plugged into a power outlet, power consumption becomes almost zero.

The driving process of the electronic apparatus 100 according to the exemplary embodiment of FIG. 1 is as follows.

First, a user plugs in the electronic apparatus 100. As the AC power switch 120 and the relay 130 of the electronic apparatus 100 are all open, sparks can not occur even if the electronic apparatus 100 is plugged in.

Then, a user turns on the AC power switch 120 of the electronic apparatus 100, at which point AC power of the AC power source S can be input to the power supply 110. The power supply 110 converts the input AC power into DC power and outputs the DC power to the DC power output port 115. Then, the controller 150 receives driving power and outputs the high signal to the gate terminal of the switching unit 140 to transmit the DC power from the power supply 110 to the coil 132 of the relay 130 through the DC power line L3. The coil 132 of the relay 130 is magnetized and the second AC power input line L3 contacts the contact terminal 131 and is closed to thereby input the AC power from the AC power source S to the power supply 110.

If the AC power switch 120 is turned on to input the AC power, the power supply 110 may output driving power through the driving power output port 117 to high-load elements other than the DC power output port 115.

Even if the AC power switch 120 is turned off, the AC power may be input through the relay 130. Thus, even if a user turns on and off the AC power switch for some time, the AC power may normally be input to the electronic apparatus 100. If the AC power switch 120 includes a push type switch, the AC power may normally be input to the electronic apparatus 100 even in the case where a user pushes the AC power switch 120 for some time (e.g., for one second) and then promptly releases the AC power switch 120

If the relay 130 is turned on and inputs the AC power to the power supply 110, the driving power is supplied to the heating unit 160, which has a relatively large load.

A smaller current flows to the first AC power input line L1 in which the AC power switch 120 is provided than to the second AC power input line L2 in which the relay 130 is provided, and thus a thinner cable may be used for the first AC power input line L1. This is because the AC power input through the first AC power input line L1 is converted into driving power of the controller 150, the circuit breaker 170 and the relay 130, which all consume less power, i.e., each having a relatively smaller load, and the AC power input through the second AC power input line L2 is converted into driving power to drive the heating unit 160 which consumes more power, i.e., having a relatively larger load.

If the AC power switch 120 includes the push type switch, a user may push the AC power switch 120 for some time just to turn on the relay 130, and low current flows to the first AC power input line L1. Then, a relatively thinner cable may be used for the first AC power input line L1 than for the second AC power input line L2.

In the existing conventional electronic apparatus, as a high current flows, a standard thick cable is used and the location of the AC power switch is limited. Meanwhile, in the present exemplary embodiment, the AC power switch 120 may be connected to a thinner cable, and thus may be provided in various locations within the electronic apparatus 100. This also improves the degree of free design of the electronic apparatus 100. In the case of an existing electrophotographic image forming apparatus, a power supply is provided in a lateral side thereof, and thus an AC power switch is also provided in a lateral side. Meanwhile, the AC power switch 120 according to the present exemplary embodiment may be provided in a front side where the manipulation panel 180 is provided.

According to the present exemplary embodiment, the relay 130 opens and closes only one of a hot line and a neutral line of the AC power source S, but is not limited thereto. Alternatively, the relay 130 may open and close both the hot line and the neutral line (the power supply line) at the same time.

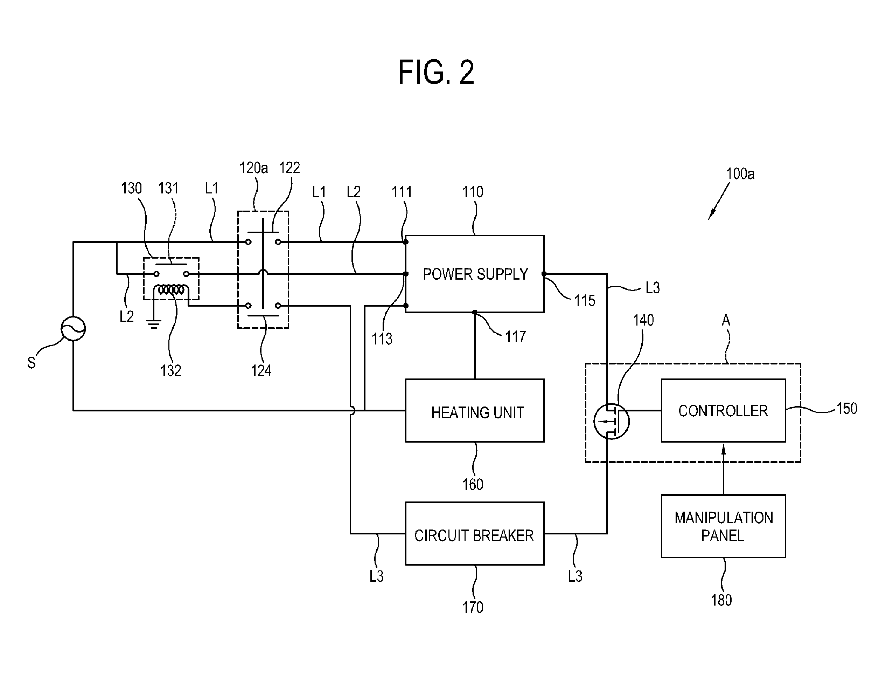

As shown in FIG. 2, an electronic apparatus 100a according to another exemplary embodiment includes the power supply 110, the relay 130, the switching unit 140, the controller 150 and an AC power switch 120a.

The electronic apparatus 100a according to the exemplary embodiment of FIG. 2 may include the AC power switch 120a which may open and close both the first AC power supply line L1 and the DC power line L3.

The AC power switch 120a may include a push-type two-step switch. More specifically, if a user pushes the AC power switch 120a once, a connecting terminal 122 contacts and closes the first AC power supply line L1, and a connecting terminal 124 does not contact the DC power line L3 which maintains an open state. If a user pushes again the AC power switch 120a while the AC power switch 120a is pushed, the DC power line L3 contacts the connecting terminal 124 and also becomes closed.

That is, the DC power line L3 is closed when the AC power switch 120a is pushed two times, and the DC power is supplied to the relay 130. Then, the AC power is input to the power supply 110 through the second AC power supply line L2 in which a relatively large current flows.

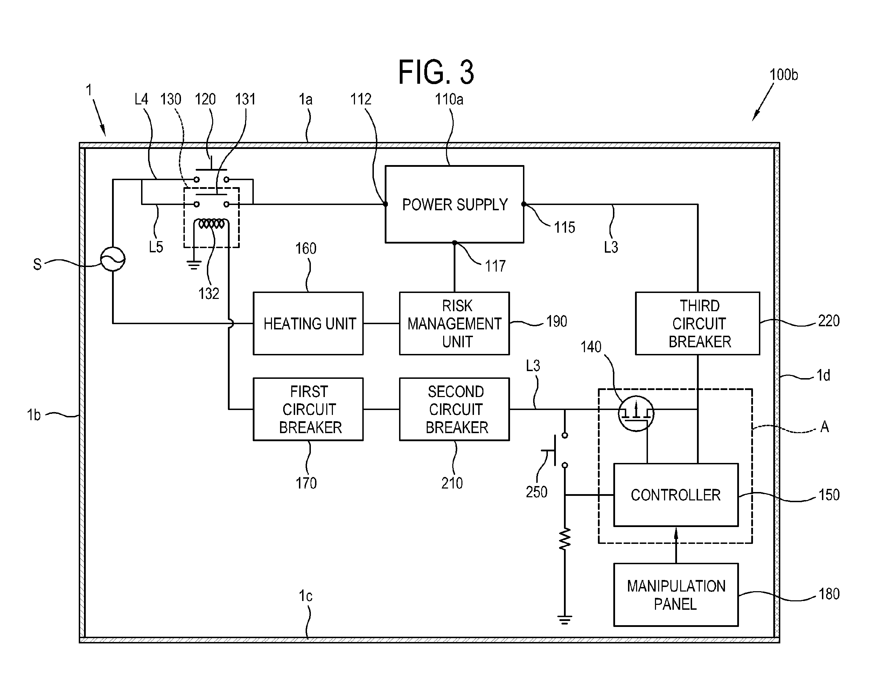

As shown in FIG. 3, an electronic apparatus 100b according to yet another exemplary embodiment includes a power supply 110a, the AC power switch 120, the relay 130, the switching unit 140 and the controller 150.

The AC power switch 120 is turned on or off to selectively transmit AC power from the AC power source S to an AC power input port 112 of the power supply 110a. The AC power switch 120 is provided on a first AC power input line L4.

The relay 130 is provided in parallel with the AC power switch 120 and selectively transmits the AC power of the AC power source S to the AC power input port 112 of the power supply 110a.

The relay 130 is provided on a second AC power input line L5 connecting the AC power source S and the power supply 110a in parallel with the first AC power input line L4.

The AC power switch 120 and the relay 130 according to the exemplary embodiment of FIG. 1 input the AC power to different power input ports 111 and 113 of the power supply 110a, respectively. According to the present exemplary embodiment, the AC power switch 120 and the relay 130 input the AC power to the same power input port 112.

The power supply 110a according to the present exemplary embodiment includes the same configuration as the power supply 110 according to the exemplary embodiment of FIG. 1, except that the power supply 110a includes one AC power input port.

The electronic apparatus 100b according to the present exemplary embodiment may include the heating unit 160 and a first circuit breaker 170, which is provided adjacent to the heating unit 160 and shuts off DC power supplied from the power supply 110a to the relay 130 if the heating unit 160 becomes overheated. As described above, the heating unit 160 may include a heater of a fusing unit if the electronic apparatus 100b includes an electrophotographic image forming apparatus. The heating unit 160 and the first circuit breaker 170 may be omitted as the case may be.

The first circuit breaker 170 may include at least one of a thermostat and a fuse.

The electronic apparatus 100b according to the present exemplary embodiment may further include a risk management unit 190 which is required to be managed due to a possibility of occurrence of a fire according to sparks or overheat of the risk management unit 190, and a second circuit breaker 210 which is provided adjacent to the risk management unit 190. The risk management unit 190 may include a heating unit (or a heater as described above) which is flammable or overheated or sparks. The risk management unit 190 may be an electronic part which may cause sparks or may short circuit and cause a fire as the case may be.

The second circuit breaker 210 shuts off the DC power supplied from the power supply 110a to the relay 130 if the risk management unit 190 catches fire.

The second circuit breaker 210 may include at least one of a thermostat and a fuse.

The electronic apparatus 100b according to the exemplary embodiment of FIG. 3 may further include a casing 1 which forms an external appearance and accommodates therein the power supply 110a, the controller 150, the switching unit 140, the relay 130, and the AC power switch 120; and a third circuit breaker 220 which is provided adjacently to the casing 220.

The casing 1 may include metal external plates 1a, 2b and 2c, and a flammable external plate 1d. The flammable external plate 1d may include a plastic material.

The third circuit breaker 220 may be provided adjacent to the flammable external plate 1d of the casing 1.

If the electronic apparatus 100b becomes damaged by fire caused external thereto, the third circuit breaker 220 may be damaged prior to the first circuit breaker 170 and the second circuit breaker 210 since the third circuit breaker 220 is adjacent to the flammable external plate 1d.

The order of damage to the first to third circuit breakers 170, 210 and 220 may reveal whether the cause of fire is external or internal if the electronic apparatus 100b is damaged by fire. More specifically, if the third circuit breaker 220 is damaged only and the first and second circuit breakers 170 and 210 are safe, it may be determined that the cause of fire is external.

By contrast, if one of the first circuit breaker 170 and the second circuit breaker 210 is damaged and the third circuit breaker 220 is safe, it may be determined that the fire was caused by the heating unit 160 and the risk management unit 190 corresponding to the first and second circuit breakers 170 and 210.

The third circuit breaker 220 may include at least one of a thermostat and a fuse.

As shown therein, the first to third circuit breakers 170, 210 and 220 may be provided in series on the same power supply line L3. Accordingly, if fire is caused by the heating unit 160, the risk management unit 190 or by external factors, the AC power supplied to the electronic apparatus 100b is shut off and a secondary damage due to the supply of the AC power can be prevented.

As shown in FIG. 3, the electronic apparatus 100b according to the present exemplary embodiment may further include a DC power switch 250 which controls the supply of the DC power from the power supply 100a to the relay 130.

The DC power switch 250 selectively connects the DC power line L3 to a ground terminal. More specifically, if the DC power switch 250 is turned on, the DC power which is transmitted through the DC power line L3 is not transmitted to the second circuit breaker 210, the first circuit breaker 170 and the relay 130, but to a ground terminal which has relatively little load. Then, the driving power is not transmitted to the relay 130 and the contacting terminal 131 separates from and opens the second AC power input line L5. As the second power input line L5 is open, the input of the AC power to the electronic apparatus 100b may be shut off. As a user pushes and then releases the AC power switch 120 when the electronic apparatus 100b is initially driven, the AC power switch 120 is turned off and the first AC power input line L4 is open.

A user may manipulate the DC power switch 250 from the off state to the on state to thereby turn off the electronic apparatus 100b without inputting the turn-off command through the manipulation panel 180.

The DC power switch 250 is provided in the line in which the DC power flows other than the AC power, and a user may manipulate the DC power switch 250 more safely.

If the controller 150 has an error and does not control the switching unit 140 properly, the electronic apparatus 100b may be turned off by the DC power switch 250.

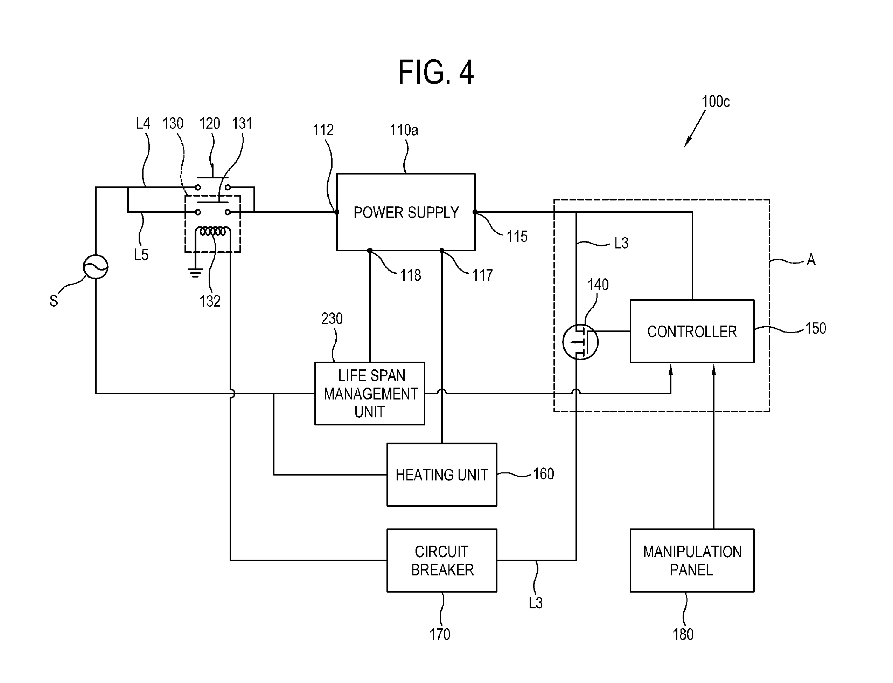

As shown in FIG. 4, an electronic apparatus 100c according to still another exemplary embodiment includes the power supply 110a, the AC power switch 120, the relay 130, the switching unit 140, the controller 150 and a life span management unit 230.

The life span management unit 230 may be an element which should be controlled for its life span and may affect the safety of the electronic apparatus 100c if used for longer than its predetermined reference life span. For example, in the case of an electrophotographic image forming apparatus, a fusing unit or a developing cartridge may be the life span management unit 230. In the case of a computer, a central processing unit (CPU) or a cooler may be the life span management unit 230. The life span management unit 230 is not limited to the foregoing elements and may include other elements which have a short life span and has a material impact on safety.

If the life span of the life span management unit 230 exceeds the predetermined reference life span, the controller 150 controls the switching unit 140 not to supply the DC power from the power supply 110a to the relay 130.

A non-volatile memory (not shown) which is accessed by the controller 150 may store therein an ID to determine a concerned item and a current life span of the life span management unit 230 counted at a current timing. The controller 150 may cumulatively count an operating time of the electronic apparatus 100c or the life span management unit 230 by using a timer (not shown), and store the counting result in the non-volatile memory. If the life span of the life span management unit 230 based on the counting result exceeds the predetermined reference life span, a low signal is output to the gate terminal of the switching unit 140 not to supply the DC power to the relay 130. Accordingly, the electronic apparatus 100c is turned off until the life span management unit 230 is replaced by a new one. Then, the life span management unit 230 which affects safety is separately controlled to prevent a secondary damage to a consumer from occurring due to negligence.

If the life span management unit 230 is replaced by a new one, the controller 150 can delete history information of life span of the old life span management unit 230 stored in the non-volatile memory and initialize the memory. Then, the electronic apparatus 100c is no longer turned off due to the life span issue until the life span of the new life span management unit 230 exceeds the predetermined reference life span.

Replacing the life span management unit 230 may be determined by an additional sensor or an ID stored in the non-volatile memory of the life span management unit 230 (serial number or the like) or an ID identified by a bar code attached to the life span management unit 230. This is an example and the determination on the replacement of the life span management unit 230 may be made by other various methods.

The controller 150 may turn off the electronic apparatus 100c based on the life span of the entire electronic apparatus 100c instead of managing the additional life span management unit 230 as the case may be. For example, if the life span of elements of the electronic apparatus 100c are substantially the same, the operating time of the electronic apparatus 100c itself is counted and the supply of the AC power to the electronic apparatus 100c may be shut off instead of managing the life span of each element.

As described above, an electronic apparatus according to the foregoing exemplary embodiments provides the following effects:
(1) power consumption may be reduced, as AC power input to a power supply is shut off in an off mode and standby power consumption may be minimized when the electronic apparatus is not in use;
(2) sparks may be prevented from occurring and damage to a user is prevented when the electronic apparatus is plugged in; and
(3) a safety device is provided for potential risky factors inside the electronic apparatus to thereby improve safety and reliability of the electronic apparatus.

Although a few exemplary embodiments of the present general inventive concept have been shown and described, it will be appreciated by those skilled in the art that changes may be made in these exemplary embodiments without departing from the principles and spirit of the general inventive concept, the range of which is defined in the appended claims and their equivalents.

## Claims

1. An electronic apparatus comprising:
a power supply which converts alternating current (AC) power input from an AC power source to direct current (DC) power to be output;
an AC power switch which is provided on a first AC power input line connecting the AC power source and the power supply and is turned on and off to selectively transmit the AC power to the power supply;
a relay which is provided on a second AC power input line connecting the AC power source and the power supply in parallel with the AC power switch, and receives the DC power from the power supply to selectively transmit the AC power to the power supply;
a switching unit which selectively transmits the DC power output from the power supply to the relay; and
a controller which controls the switching unit to supply the DC power to the relay if the AC power switch is turned on.

2. The electronic apparatus according to claim 1, further comprising:
a heating unit; and
a first circuit breaker which shuts off the DC power supplied from the switching unit to the relay if the heating unit is overheated.

3. The electronic apparatus according to claim 2, wherein the first circuit breaker comprises at least of a thermostat and a fuse.

4. The electronic apparatus according to claim 2 or 3, wherein the heating unit is provided in plural, and the first circuit breaker is provided in series corresponding to the number of the heating unit.

5. The electronic apparatus according to any preceding claim, further comprising:
a manipulation panel, wherein
the controller controls the switching unit to shut off the DC power supplied to the relay if a turn-off command is input through the manipulation panel.

6. The electronic apparatus according to any preceding claim, further comprising:
a second circuit breaker which is provided adjacently to a risk management unit which has risk of causing ignition, and shuts off the DC power supplied to the relay from the power supply if the risk management unit flames.

7. The electronic apparatus according to any preceding claim, further comprising:
a casing which accommodates therein the power supply, the relay, the power switch, the switching unit and the controller, and
a third circuit breaker which is provided adjacently to the casing and shuts off the DC power supplied to the relay from the power supply if a fire breaks out due to an external cause.

8. The electronic apparatus according to any preceding claim, further comprising:
a DC power switch which is provided to control the supply of the DC power from the power supply to the relay.

9. The electronic apparatus according to any preceding claim, further comprising:
a life span management unit, wherein
the controller controls the switching unit not to supply the DC power to the relay if a life span of the life span management unit exceeds a predetermined reference life span.

10. The electronic apparatus according to any preceding claim, wherein the first AC power supply line comprises a thinner cable than the second AC power supply line.
